# EUROPEAN PATENT APPLICATION

(11) **EP 4 765 361 A1**
(43) Date of publication of application: **24.06.2026**
(21) Application number: 25762425.4
(22) Date of filing: 28.02.2025
(51) Int. Cl.: H01M 50/105, H01M 10/04, H01M 50/264, H01M 50/126, H01M 50/178, H01M 50/211, H01M 50/102, H01M 50/184

(54) **BATTERY ASSEMBLY**

(30) Priority: 29.02.2024 KR 20240030248; 26.02.2025 KR 20250025259
(71) Applicant: LG Energy Solution, Ltd., Seoul 07335 (KR)
(72) Inventor: LEE, Min Kyu, Daejeon 34122 (KR); KIM, Sang Hun, Daejeon 34122 (KR); YU, Hyung Kyun, Daejeon 34122 (KR); LEE, Jae Ho, Daejeon 34122 (KR); CHOI, Ji Eun, Daejeon 34122 (KR); LEE, Ji Sun, Daejeon 34122 (KR)
(74) Representative: Goddar, Heinz J.
(86) International application number: PCT/KR2025/002836
(87) International publication number: WO 2025/183508

(57) **Abstract**

The present disclosure relates to a battery assembly, and more specifically, to a battery assembly including secondary batteries that can be charged and discharged. A battery assembly according to an embodiment of the present disclosure may include a plurality of secondary batteries; and a housing accommodating the plurality of secondary batteries, wherein the secondary battery may include an electrode assembly; an exterior material having a receiving portion accommodating the electrode assembly and an exterior material opening that allows an internal space of the receiving portion to communicate with the outside; and a cover member covering the exterior material opening, wherein some of the exterior material may overlap each other to form an exterior material overlapping portion, and the exterior material overlapping portion may be in close contact with the receiving portion and the housing therebetween or in close contact with the receiving portion and a neighboring secondary battery therebetween.

## Description

### TECHNICAL FIELD

### CROSS-REFERENCE TO RELATED APPLICATIONS

The present application claims priority to Korean Patent Application No. 10-2024-0030248 filed on February 29, 2024 and Korean Patent Application No. 10-2025-0025259 filed on February 26, 2025 in the Republic of Korea, the disclosures of which are incorporated herein by reference.

### TECHNICAL FIELD

The present disclosure relates to a battery assembly, and more specifically, to a battery assembly including secondary batteries that can be charged and discharged.

### BACKGROUND ART

A secondary battery (rechargeable battery) is a battery that can be charged and discharged, unlike a primary battery that cannot be recharged. Small secondary batteries are used in portable electronic devices such as mobile phones, laptop computers, and camcorders, while medium or large secondary batteries are widely used as a power source for driving motors in hybrid vehicles or the like.

Secondary batteries may be classified into various types according to the type of exterior material that accommodates the electrode assembly. For example, secondary batteries may be classified into prismatic secondary batteries in which the electrode assembly is accommodated inside a prismatic metal can, cylindrical secondary batteries in which the electrode assembly is accommodated inside a cylindrical metal can, and pouch-type secondary batteries in which the electrode assembly is accommodated inside a pouch.

These pouch-type secondary batteries may be accommodated in a housing made of resin or metal to form a battery assembly (battery module and/or battery pack). Here, some of the pouches of the pouch-type secondary batteries may be bonded to each other to form a pouch joint.

Conventionally, in order to prevent the pouch joint from bursting when the internal pressure of the pouch increases, a separate sealing member having a certain volume is used to fix the pouch joint. In this case, the sealing force of the pouch joint may be improved, but there is a problem that the energy density of the entire battery assembly is lowered due to the volume occupied by the sealing member.

### SUMMARY

### TECHNICAL PROBLEM

The present disclosure is designed to solve the problems of the related art, and therefore the present disclosure is directed to improving the sealing force of a pouch-type secondary battery accommodated in a battery assembly without using an additional sealing member.

### TECHNICAL SOLUTION

A battery assembly according to an embodiment of the present disclosure may include a plurality of secondary batteries; and a housing accommodating the plurality of secondary batteries, wherein the secondary battery may include an electrode assembly; an exterior material having a receiving portion accommodating the electrode assembly and an exterior material opening that allows an internal space of the receiving portion to communicate with the outside; and a cover member covering the exterior material opening, wherein some of the exterior material may overlap each other to form an exterior material overlapping portion, and the exterior material overlapping portion may be in close contact with the receiving portion and the housing therebetween or in close contact with the receiving portion and a neighboring secondary battery therebetween.

The exterior material may be composed of a laminate sheet including a metal layer and a resin layer formed on at least one surface of the metal layer.

At least some of the exterior material overlapping portion may be bonded or fused to each other.

Electrode tabs may protrude from both side surfaces of the electrode assembly in the length direction, and the exterior material overlapping portion may be folded to one side surface of the electrode assembly in the width direction or one side surface thereof in the height direction.

The secondary battery may further include a fixing film that fixes the folded exterior material overlapping portion.

The plurality of secondary batteries may be disposed in a row in the horizontal direction inside the housing.

The exterior material overlapping portions of the plurality of secondary batteries may be in close contact with the receiving portion and a lower wall of the housing therebetween.

Meanwhile, the battery assembly according to an embodiment of the present disclosure may further include a fixing member that fixes the plurality of secondary batteries to the lower wall of the housing.

The fixing member may include a resin cured in contact with the exterior material overlapping portion of each of the plurality of secondary batteries.

The plurality of secondary batteries may be inserted between both side walls of the housing so as to be pressed in the horizontal direction by the housing.

Meanwhile, in a battery assembly according to another embodiment of the present disclosure, the plurality of exterior material overlapping portions may be arranged in a row along the horizontal direction.

The exterior material overlapping portions may be in close contact with the neighboring secondary batteries or both side walls of the housing.

The plurality of exterior material overlapping portions may include a plurality of first exterior material overlapping portions arranged in a row along the horizontal direction; and a plurality of second exterior material overlapping portions arranged in a row along the horizontal direction above the first exterior material overlapping portions.

One of the pair of neighboring secondary batteries may include the first exterior material overlapping portion, and the other of the pair of neighboring secondary batteries may include the second exterior material overlapping portion.

A pair of the first exterior material overlapping portion and the second exterior material overlapping portion adjacent to each other may be provided between the surfaces of the pair of neighboring secondary batteries facing each other.

A lead insertion hole into which an electrode lead is inserted may be formed in the cover member.

The exterior material overlapping portions of the plurality of secondary batteries may be in close contact with the receiving portion and an upper wall of the housing therebetween.

### ADVANTAGEOUS EFFECTS

According to a battery assembly according to an embodiment of the present disclosure, the exterior material overlapping portion is pressed inward by the inner wall of the housing or the neighboring secondary battery, and thus the exterior material overlapping portion may be prevented from bursting even when the internal pressure of the exterior material increases.

### BRIEF DESCRIPTION OF THE DRAWINGS

FIG. 1 is a perspective view showing the overall structure of a battery assembly according to Embodiment 1 of the present disclosure.
FIG. 2 is an exploded perspective view of a secondary battery accommodated in the battery assembly of FIG. 1.
FIG. 3 is a view for describing that a sealing portion is formed in the secondary battery of FIG. 2.
FIG. 4 is a view for describing that a fixing film is attached to the secondary battery of FIG. 2.
FIG. 5 is a view showing the internal structure of the battery assembly according to FIG. 1.
FIG. 6 is a view showing the internal structure of a battery assembly according to Embodiment 2 of the present disclosure.
FIG. 7 is a view showing the internal structure of a battery assembly according to Embodiment 3 of the present disclosure.
FIG. 8 is a view showing the internal structure of a battery assembly according to Embodiment 4 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a battery assembly according to the present disclosure will be described with reference to the drawings.

### Embodiment 1

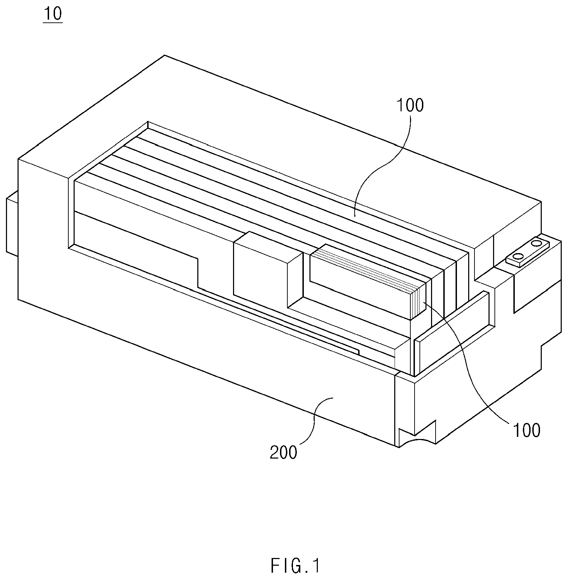

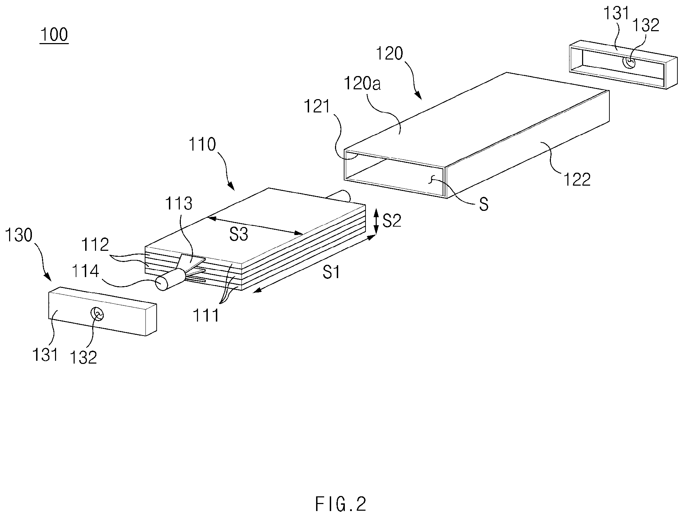

FIG. 1 is a perspective view showing the overall structure of a battery assembly according to Embodiment 1 of the present disclosure, and FIG. 2 is an exploded perspective view of a secondary battery accommodated in the battery assembly of FIG. 1.

Referring to FIGS. 1 and 2, a battery assembly 10 according to Embodiment 1 of the present disclosure may include a plurality of secondary batteries 100 and a housing 200 accommodating these secondary batteries 100. Here, each of the plurality of secondary batteries 100 accommodated inside the housing 200 may include an electrode assembly 110 in which electrodes 111 and separators 112 are alternately interposed; an exterior material 120 having a receiving portion 120a accommodating the electrode assembly 110 and an exterior material opening 121 that allows an internal space S of the receiving portion 120a to communicate with the outside; and a cover member 130 covering the exterior material opening 121.

At this time, some of the exterior material 120 may overlap each other to form an exterior material overlapping portion 122, and the exterior material overlapping portion 122 may be in close contact with the receiving portion 120a and the housing 200 therebetween. In this case, the exterior material overlapping portion 122 is pressed inward by an inner wall of the housing 200 or a neighboring secondary battery 100, and thus the exterior material overlapping portion 122 may be prevented from bursting even when the internal pressure of the exterior material 120 increases.

Additionally, in the battery assembly 10 according to Embodiment 1 of the present disclosure, no additional sealing member having a volume is coupled to the exterior material overlapping portion 122 of the secondary battery 100, which may prevent the exterior material overlapping portion 122 from bursting without increasing the volume of the secondary battery 100. Therefore, the battery assembly 10 according to Embodiment 1 of the present disclosure has an advantageous effect of improving the energy density of the battery assembly 10 compared to the case of coupling a sealing member having a volume to the exterior material overlapping portion 122.

The battery assembly 10 is a battery array in which a plurality of secondary batteries 100 are electrically connected, and may be configured in various ways. For example, the battery assembly 10 may be a battery module in which a plurality of secondary batteries 100 are accommodated in a module housing, or a cell to pack in which a plurality of secondary batteries 100 are accommodated in a pack housing.

The secondary battery 100 is a battery that can be repeatedly charged and discharged, and may be configured in various ways. For example, the secondary battery 100 may be a pouch cell in which an electrode assembly 110 where electrodes 111 and separators 112 are alternately interposed is wrapped in a sheet-like exterior material 120.

The electrode 111 may be a positive electrode or a negative electrode. Here, the positive electrode may include a positive electrode current collector and a positive electrode active material coated on the positive electrode current collector, and the negative electrode may include a negative electrode current collector and a negative electrode active material coated on the negative electrode current collector. The separator 112 is a membrane made of an insulating material interposed between the positive electrode and the negative electrode to block contact between the positive electrode and the negative electrode, and multiple pores through which positive ions pass may be formed in the separator 112.

The exterior material 120 may be a pouch-type exterior material composed of a laminate sheet including a metal layer such as aluminum or stainless steel and one or more resin layers. Here, the resin layer may be formed on at least one of an outer surface and an inner surface of the metal layer. A receiving portion 120a for accommodating the electrode assembly 110 may be formed inside this exterior material 120. Additionally, both sides of the receiving portion 120a may communicate with the outside.

The metal layer constituting the exterior material 200 may serve as a substrate that maintains mechanical strength and a barrier layer that prevents the penetration of moisture and oxygen. The metal layer may be composed of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

A first resin layer coated on the outer surface of the metal layer should have excellent resistance to the external environment in order to protect the electrode assembly from the outside, and thus the first resin layer is required to have excellent tensile strength and corrosion resistance relative to its thickness. Materials for the first resin layer may include a polyester-based resin such as polyethylene terephthalate (PET) and polyethylene naphthalate (PEN), a polyolefin-based resin such as polyethylene and polypropylene, and the like.

A second resin layer coated on the inner surface of the metal layer may be coupled to the cover member 130 to be described later to seal the receiving portion 120a, and the second resin layer may be made of a polyolefin-based resin. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

Conventionally, a pouch-type secondary battery was manufactured by molding a cup portion on a pouch film, inserting an electrode assembly into the cup portion, and then sealing the pouch film where the cup portion was molded with another pouch film. However, there was a limit to the molding depth of the cup portion due to the material characteristics of the pouch film, so that it was impossible to mold the cup portion deeply to increase the capacity of the secondary battery. Additionally, the thickness of the pouch film became thin during the molding process of the cup portion, resulting in a problem of the occurrence of defects such as cracks or the like in the pouch film.

On the other hand, the exterior material 120 of the secondary battery 100 according to the present disclosure may be composed of a rolled or folded laminate sheet. Therefore, the secondary battery 100 according to the present disclosure may accommodate the electrode assembly 110 in the receiving portion 120a of the exterior material 120 without molding a separate cup portion. In this case, since the conventional limitation due to the formation of the cup portion in the exterior material is not applied, the capacity of the secondary battery 100 may be improved by increasing the size of the receiving portion 120a. Additionally, a portion where the thickness is reduced is not formed in the exterior material 120 prepared by rolling or folding the laminate sheet, so that it is possible to prevent the occurrence of defects such as cracks or the like in the exterior material 120.

For reference, the secondary battery 100 according to the present disclosure may be formed by seating the electrode assembly 110 on an upper surface of the unfolded laminate sheet, and then rolling or folding the laminate sheet. Additionally, the secondary battery 100 according to the present disclosure may be formed by rolling or folding a laminate sheet to form a receiving portion 120a, an exterior material overlapping portion 122, and an exterior material opening 121, and then inserting the electrode assembly 110 into the exterior material opening 121. In both of the above cases, the electrode assembly 110 may be accommodated inside the exterior material 120 without molding a separate cup portion.

At this time, the exterior material overlapping portion 122 is formed by bonding one end and the other end of the laminate sheet, and this exterior material overlapping portion 122 may be folded to one side of the secondary battery 100 in the width direction or one side thereof in the height direction. In the case of the battery assembly 10 according to Embodiment 1 of the present disclosure, the exterior material overlapping portion 122 may be folded to one side of the secondary battery 100 in the height direction.

Meanwhile, the cover member 130 is inserted into the exterior material opening 121 to seal an inner space S of the receiving portion 120a, and may be configured in various ways. For example, the cover member 130 may include a body 131 in which a portion coupled to the exterior material 120 is formed flat, and a lead insertion hole 132 through which an electrode lead 114 passes may be formed in this body 131.

The electrode lead 114 passing through the lead insertion hole 132 may be connected to electrode tabs 113 to which the electrodes 111 are welded. Additionally, the lead insertion hole 132 may have a shape corresponding to the shape of the electrode lead 114. A sealing member such as an O-ring may be interposed between the lead insertion hole 132 and the electrode lead 114, or a sealant layer made of a thermoplastic resin may be formed. In this case, the electrolyte injected into the receiving portion 120a may be prevented from leaking through the lead insertion hole 132.

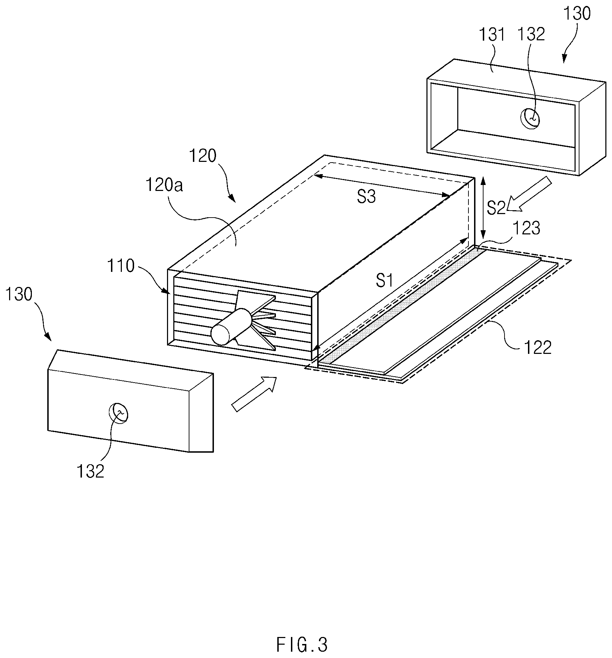

Meanwhile, FIG. 3 is a view for describing that a sealing portion is formed in the secondary battery of FIG. 2.

Referring to FIG. 3, at least some of the exterior material overlapping portion 122 may be bonded or fused to each other. That is, some of the exterior material overlapping portion 122 that are bonded or fused to each other may form a sealing portion 123. This sealing portion 123 may be formed at various positions of the exterior material overlapping portion 122.

For example, the sealing portion 123 may be formed only on a part of the exterior material overlapping portion 122. When the sealing portion 123 is formed on the entire area of the exterior material overlapping portion 122, there is a problem that the exterior material overlapping portion 122 is damaged by over-sealing, and the sealing portion 123 may be formed only on a part of the exterior material overlapping portion 122 to solve the above problem.

Additionally, as shown in FIG. 3, the sealing portion 123 may be formed on the innermost side of the exterior material overlapping portion 122. In this case, there is an advantageous effect of improving the sealing force compared to the case where the sealing portion 123 is formed at another position on the exterior material overlapping portion 122.

The sealing portion 123 may be formed long in a straight line at the innermost side of the exterior material overlapping portion 122. Specifically, the sealing portion 123 may have a shape that extends long in a straight line from one innermost end of the exterior material overlapping portion 122 toward the other innermost end of the exterior material overlapping portion 122. At this time, the sealing portion 123 may have various widths. For example, the sealing portion 123 may have a width of 8 to 12 mm, and may be formed in a straight line at the innermost side of the exterior material overlapping portion 122.

Meanwhile, in FIGS. 2 and 3, the length direction S1, height direction S2, and width direction S3 of the electrode assembly 110 are illustrated. Referring to FIGS. 2 and 3, the electrode tabs 113 protrude from both side surfaces of the electrode assembly 110 in the length direction S1, and the exterior material overlapping portion 122 may be folded to one side surface of the electrode assembly 110 in the width direction S3. Additionally, although not shown in FIGS. 2 and 3, the exterior material overlapping portion 122 may also be folded to one side surface of the electrode assembly 110 in the height direction S2.

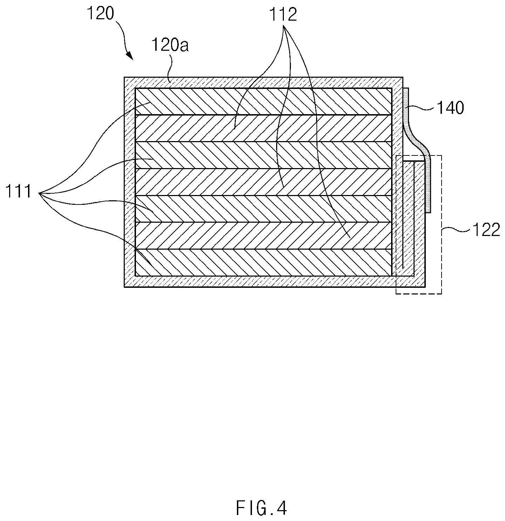

Meanwhile, FIG. 4 is a view for describing that a fixing film is attached to the secondary battery of FIG. 2.

Referring to FIG. 4, the secondary battery 100 may include a fixing film 140 that fixes the exterior material overlapping portion 122 folded to one side. Various members having a fixing force and a thin thickness may be applied to this fixing film 140. For example, the fixing film 140 may be a fixing tape having an adhesive layer formed on one or both surfaces. As such, the fixing film 140 that fixes the exterior material overlapping portion 122 is formed to be extremely thin in thickness, and thus the increase in volume or weight thereof may be minimized even when attached to the secondary battery 100.

Meanwhile, the fixing film 140 brings the folded exterior material overlapping portion 122 into close contact with an outer surface of the secondary battery 100, so that the position of the exterior material overlapping portion 122 may be fixed to the surface of the secondary battery 100. This fixing film 140 may be attached to various positions of the secondary battery 100.

As shown in FIG. 4, the fixing film 140 may be attached to one side of the secondary battery 100 in the width direction to bring the end of the exterior material overlapping portion 122 into close contact with the outer surface of the secondary battery 100. Additionally, although not shown in the drawing, when the exterior material overlapping portion 122 is folded to one side of the secondary battery 100 in the height direction, the fixing film 140 may be attached to one side of the secondary battery 100 in the height direction.

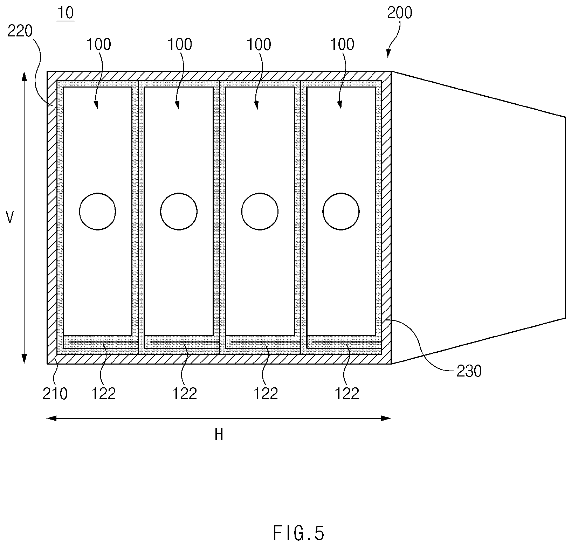

Meanwhile, FIG. 5 is a view showing the internal structure of the battery assembly according to FIG. 1.

Referring to FIG. 5, the plurality of secondary batteries 100 are disposed in a row in the horizontal direction H inside the housing 200, and the exterior material overlapping portions 122 formed on each of the plurality of secondary batteries 100 may be in close contact with the receiving portion 120a and the lower wall 210 of the housing 200 therebetween. That is, the exterior material overlapping portions 122 formed on each of the plurality of secondary batteries 100 may all be in contact with the lower wall 210 of the housing 200.

In this case, the exterior material overlapping portion 122 is pressed by the weight of the secondary battery 100, and thus the exterior material overlapping portion 122 may be prevented from bursting even when the internal pressure of the exterior material 120 increases. In particular, a sealing member having a volume is not coupled to the exterior material overlapping portion 122 of the secondary battery 100, so that the exterior material overlapping portion 122 may be prevented from bursting without increasing the volume of the secondary battery 100.

Meanwhile, the battery assembly 10 may include a fixing member (not shown) that fixes the plurality of secondary batteries 100 to the lower wall 210 of the housing 200. At this time, the fixing member may be a resin that is cured in contact with the exterior material overlapping portion 122 of each of the plurality of secondary batteries 100.

Specifically, the resin in a liquid state may be applied to the lower wall 210 of the housing 200, and thereafter, the plurality of secondary batteries 100 may be disposed inside the housing 200. At this time, the resin in a liquid state may be cured while in contact with one surface of the secondary batteries 100 to fix the positions of the secondary batteries 100 inside the housing 200.

The resin applied to the lower wall 210 of the housing 200 may be cured with the exterior material overlapping portion 122 of each of the plurality of secondary batteries 100 in contact with the folded surface. In this case, the exterior material overlapping portion 122 is fixed to one surface of the secondary battery 100 in a folded state, so that the exterior material overlapping portion 122 may be prevented from being crumpled even when the secondary batteries 100 are repeatedly charged and discharged.

### Embodiment 2

The secondary battery according to Embodiment 2 of the present disclosure differs from Embodiment 1 in that the exterior material overlapping portions are arranged in a row along the horizontal direction. Contents in common with Embodiment 1 will be omitted as much as possible, and Embodiment 2 will be described focusing on differences. That is, it is obvious that contents not described in Embodiment 2 may be considered as contents of Embodiment 1 if necessary.

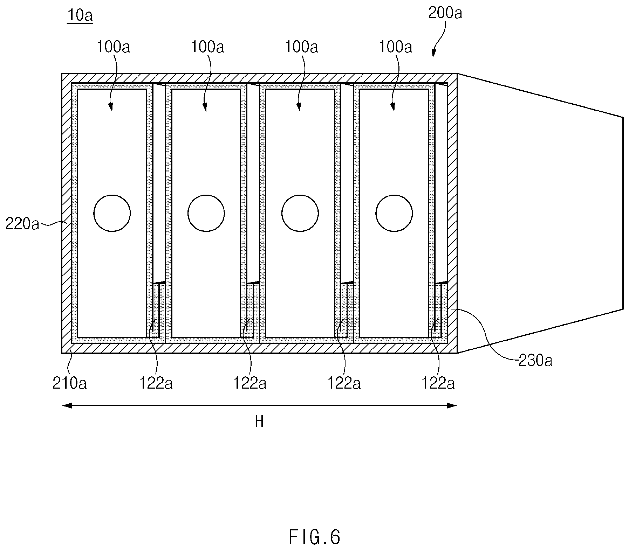

FIG. 6 is a view showing the internal structure of a battery assembly according to Embodiment 2 of the present disclosure.

Referring to FIG. 6, a battery assembly 10a according to Embodiment 2 of the present disclosure may include a plurality of secondary batteries 100a and a housing 200a accommodating the secondary batteries 100a. Here, the exterior material overlapping portions 122a of each of the plurality of secondary batteries 100a may be folded to one side surface of the electrode assembly 110a. In particular, in the battery assembly 10a according to Embodiment 2 of the present disclosure, the exterior material overlapping portions 122a of each of the plurality of secondary batteries 100a may be folded to one side surface in the vertical direction V of FIG. 6.

The plurality of secondary batteries 100a may be inserted between the left and right side walls 220a, 230a of the housing 200a so as to be pressed in the horizontal direction H by the housing 200a. Here, the exterior material overlapping portions 122a formed in each of the plurality of secondary batteries 100a may be arranged in a row along the horizontal direction H within the housing 200a. That is, the secondary batteries 100a may be accommodated inside the housing 200a so that the folded exterior material overlapping portions 122a face the horizontal direction H.

Here, the exterior material overlapping portions 122a may touch the neighboring secondary battery 100a or the left and right side walls 220a, 230a of the housing 200a. Specifically, as shown in FIG. 6, the exterior material overlapping portions 122a of the secondary batteries 100a disposed inside the housing 200a may all be arranged to the right. And, the exterior material overlapping portion 122a of any one secondary battery 100a accommodated in the housing 200a may be in close contact with the neighboring secondary battery 100a or the right side wall 230a of the housing 200a.

In this case, the exterior material overlapping portion 122a of any one secondary battery 100a accommodated in the housing 200a may be in close contact with the receiving portion of the neighboring secondary battery 100a or the right side wall 230a of the housing 200a. That is, the exterior material overlapping portion 122a of one secondary battery 100a may be in close contact with the receiving portion of the one secondary battery 100a and the receiving portion of another neighboring secondary battery 100a therebetween, or the exterior material overlapping portion 122a of one secondary battery 100a may be in close contact with the receiving portion of the one secondary battery 100a and the right side wall 230a of the housing 200a therebetween.

Meanwhile, although not shown in the drawing, the exterior material overlapping portions 122a of the secondary batteries 100a disposed inside the housing 200a may all be arranged to the left. In this case, the exterior material overlapping portion 122a of any one secondary battery 100a accommodated in the housing 200a may be in close contact with the receiving portion of the neighboring secondary battery 100a or the left side wall 220a of the housing 200a. That is, the exterior material overlapping portion 122a of one secondary battery 100a may be in close contact with the receiving portion of the one secondary battery 100a and the receiving portion of another neighboring secondary battery 100a therebetween, or the exterior material overlapping portion 122a of one secondary battery 100a may be in close contact with the receiving portion of the one secondary battery 100a and the left side wall 220a of the housing 200a therebetween.

In the battery assembly 10a according to Embodiment 2 of the present disclosure, the exterior material overlapping portion 122a formed on each of the plurality of secondary batteries 100a is pressed inward by the neighboring secondary battery 100a or the left and right side walls 220a, 230a of the housing 200a, and thus the exterior material overlapping portion 122a may be prevented from bursting even when the internal pressure of the exterior material 120a increases.

Additionally, in the battery assembly 10a according to Embodiment 2 of the present disclosure, a sealing member having a volume is not coupled to the exterior material overlapping portion 122a of the secondary battery 100a, so that the exterior material overlapping portion 122a may be prevented from bursting without increasing the volume of the secondary battery 100a. Therefore, the battery assembly 10a according to Embodiment 2 of the present disclosure has an advantageous effect of improving the energy density of the battery assembly 10a compared to the case where the sealing member is coupled to the exterior material overlapping portion 122a.

### Embodiment 3

The secondary battery according to Embodiment 3 of the present disclosure differs from Embodiments 1 and 2 in that the plurality of exterior material overlapping portions are composed of a first exterior material overlapping portion and a second exterior material overlapping portion. Contents in common with Embodiments 1 and 2 will be omitted as much as possible, and Embodiment 3 will be described focusing on differences. That is, it is obvious that contents not described in Embodiment 3 may be considered as contents of Embodiments 1 and 2 if necessary.

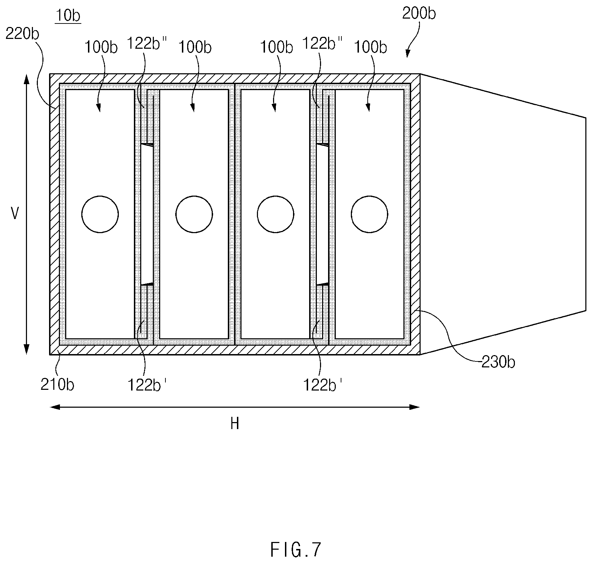

FIG. 7 is a view showing the internal structure of a battery assembly according to Embodiment 3 of the present disclosure.

Referring to FIG. 7, a battery assembly 10b according to Embodiment 3 of the present disclosure may include a plurality of secondary batteries 100b and a housing 200b accommodating the secondary batteries 100b. Here, the exterior material overlap portion 122b of each of the plurality of secondary batteries 100b may be folded to one side surface or the other side surface of the electrode assembly 110b. In particular, in the battery assembly 10b according to Embodiment 3 of the present disclosure, the exterior material overlapping portions 122b', 122b" of each of the plurality of secondary batteries 100b may be folded to one side surface or the other side surface in the vertical direction V of FIG. 7.

The plurality of secondary batteries 100b may be inserted between the left and right side walls 220b, 230b of the housing 200b so as to be pressed in the horizontal direction H by the housing 200b. Here, the plurality of exterior material overlapping portions 122b may include a plurality of first exterior material overlapping portions 122b' arranged in a row along the horizontal direction H; and a plurality of second exterior material overlapping portions 122b" arranged in a row along the horizontal direction H above the first exterior material overlapping portions 122b'.

Here, the exterior material overlapping portions 122b', 122b" may be in close contact with a pair of neighboring secondary batteries 100b by them. Specifically, as shown in FIG. 7, a pair of first exterior material overlapping portion 122b' and second exterior material overlapping portion 122b" adjacent to each other may be provided between the facing surfaces of a pair of neighboring secondary batteries 100b.

That is, the first exterior material overlapping portion 122b' may be an exterior material overlapping portion of one secondary battery 100b, and the second exterior material overlapping portion 122b" may be an exterior material overlapping portion of another secondary battery 100b adjacent to the one secondary battery 100b.

That is, a pair of neighboring secondary batteries 100 may face each other so that the exterior material overlapping portions 122b', 122b" are provided on the same side. In this case, the volume occupied by the exterior material overlapping portions 122b', 122b" in the horizontal direction H may be minimized, so that the waste of space of the housing 200b in the horizontal direction H may be minimized.

In the battery assembly 10b according to Embodiment 3 of the present disclosure, the exterior material overlapping portions 122b', 122b" formed on each of the plurality of secondary batteries 100b are pressed inward by the neighboring secondary battery 100b, and thus the exterior material overlapping portions 122b', 122b" may be prevented from bursting even when the internal pressure of the exterior material 120b increases.

Additionally, in the battery assembly 10b according to Embodiment 3 of the present disclosure, a sealing member having a volume is not coupled to the exterior material overlapping portions 122b', 122b" of the secondary battery 100, so that the exterior material overlapping portions 122b', 122b" may be prevented from bursting without increasing the volume of the secondary battery 100b. Therefore, the battery assembly 10b according to Embodiment 3 of the present disclosure has an advantageous effect of improving the energy density of the battery assembly 10b compared to the case where the sealing member is coupled to the exterior material overlapping portions 122b', 122b".

### Embodiment 4

The secondary battery according to Embodiment 4 of the present disclosure differs from Embodiments 1 to 3 in that the plurality of exterior material overlapping portions are in close contact with an upper wall of the housing of the secondary battery. Contents in common with Embodiments 1 to 3 will be omitted as much as possible, and Embodiment 4 will be described focusing on differences. That is, it is obvious that contents not described in Embodiment 4 may be considered as contents of Embodiments 1 to 3 if necessary.

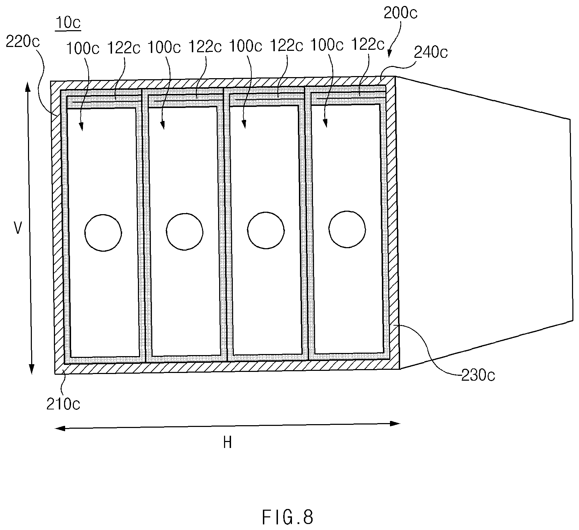

FIG. 8 is a view showing the internal structure of a battery assembly according to Embodiment 4 of the present disclosure.

Referring to FIG. 8, a battery assembly 10c according to Embodiment 4 of the present disclosure may include a plurality of secondary batteries 100c and a housing 200c accommodating the secondary batteries 100c. Here, the exterior material overlapping portions 122c of each of the plurality of secondary batteries 100c may be folded to one side surface of the secondary battery 100c. In particular, in the battery assembly 10c according to Embodiment 4 of the present disclosure, the exterior material overlapping portions 122c of each of the plurality of secondary batteries 100c may be folded to one side surface in the horizontal direction H of FIG. 8.

The plurality of secondary batteries 100a may be inserted between the left and right side walls 220a, 230a of the housing 200a so as to be pressed in the horizontal direction H by the housing 200a. Here, the exterior material overlapping portions 122a formed in each of the plurality of secondary batteries 100a may be arranged in a row along the horizontal direction H within the housing 200a. That is, the secondary batteries 100a may be accommodated inside the housing 200a so that the folded exterior material overlapping portions 122a face the horizontal direction H.

Here, the exterior material overlapping portion 122c of each of the plurality of secondary batteries 100c may be in close contact with the receiving portion of the corresponding secondary battery 100c and the upper wall 240c of the housing 200 therebetween. In this case, the exterior material overlapping portion 122c of each of the plurality of secondary batteries 100c is pressed toward the receiving portion by the upper wall 240c of the housing 200c, and thus the exterior material overlapping portion 122c may be prevented from bursting even when the internal pressure of the exterior material 120c increases due to charging and discharging of the secondary battery 100c.

The present disclosure has been hereinabove described with regard to a limited number of embodiments and drawings, but the present disclosure is not limited thereto and may be embodied in different forms by those having ordinary skill in the art within the technical aspect of the present disclosure and the scope of the appended claims and their equivalents.

### [List of Reference Numerals]

| | | | |
|---|---|---|---|
| 10: | Battery assembly | 100: | Secondary battery |
| 110: | Electrode assembly | 111: | Electrode |
| 112: | Separator | 113: | Electrode tab |
| 114: | Electrode lead | 120: | Exterior material |
| 121: | Exterior material opening | 122: | Exterior material overlapping portion |
| 123: | Sealing portion | 130: | Cover member |
| 131: | Body portion | 132: | Lead insertion hole |
| 140: | Fixing member | 200: | Housing |
| 210: | Lower wall of housing | 220, 230: | Left and right side walls of housing |

## Claims

1. A battery assembly comprising:
a plurality of secondary batteries; and
a housing accommodating the plurality of secondary batteries,
wherein the secondary battery comprises:
an electrode assembly;
an exterior material having a receiving portion accommodating the electrode assembly and an exterior material opening that allows an internal space of the receiving portion to communicate with the outside; and
a cover member covering the exterior material opening,
wherein some of the exterior material overlap each other to form an exterior material overlapping portion, and
the exterior material overlapping portion is in close contact with the receiving portion and the housing therebetween or in close contact with the receiving portion and a neighboring secondary battery therebetween.

2. The battery assembly according to claim 1,
wherein the exterior material is composed of a laminate sheet comprising a metal layer and a resin layer formed on at least one surface of the metal layer.

3. The battery assembly according to claim 1,
wherein at least some of the exterior material overlapping portion are bonded or fused to each other.

4. The battery assembly according to claim 1,
wherein electrode tabs protrude from both side surfaces of the electrode assembly in the length direction, and
the exterior material overlapping portion is folded to one side surface of the electrode assembly in the width direction or one side surface thereof in the height direction.

5. The battery assembly according to claim 4,
wherein the secondary battery further comprises a fixing film that fixes the folded exterior material overlapping portion.

6. The battery assembly according to claim 4,
wherein the plurality of secondary batteries are disposed in a row in the horizontal direction inside the housing.

7. The battery assembly according to claim 6,
wherein the exterior material overlapping portions of the plurality of secondary batteries are in close contact with the receiving portion and a lower wall of the housing therebetween.

8. The battery assembly according to claim 1, further comprising:
a fixing member that fixes the plurality of secondary batteries to the lower wall of the housing.

9. The battery assembly according to claim 8,
wherein the fixing member comprises a resin cured in contact with the exterior material overlapping portion of each of the plurality of secondary batteries.

10. The battery assembly according to claim 6,
wherein the plurality of secondary batteries are inserted between both side walls of the housing so as to be pressed in the horizontal direction by the housing.

11. The battery assembly according to claim 10,
wherein the plurality of exterior material overlapping portions are arranged in a row along the horizontal direction.

12. The battery assembly according to claim 11,
wherein the exterior material overlapping portions are in close contact with the neighboring secondary batteries or both side walls of the housing.

13. The battery assembly according to claim 10,
wherein the plurality of exterior material overlapping portions comprise:
a plurality of first exterior material overlapping portions arranged in a row along the horizontal direction; and
a plurality of second exterior material overlapping portions arranged in a row along the horizontal direction above the first exterior material overlapping portions.

14. The battery assembly according to claim 13,
wherein one of the pair of neighboring secondary batteries comprises the first exterior material overlapping portion, and the other of the pair of neighboring secondary batteries comprises the second exterior material overlapping portion.

15. The battery assembly according to claim 14,
wherein a pair of the first exterior material overlapping portion and the second exterior material overlapping portion adjacent to each other are provided between the surfaces of the pair of neighboring secondary batteries facing each other.

16. The battery assembly according to claim 1,
wherein a lead insertion hole into which an electrode lead is inserted is formed in the cover member.

17. The battery assembly according to claim 6,
wherein the exterior material overlapping portions of the plurality of secondary batteries are in close contact with the receiving portion and an upper wall of the housing therebetween.
